Europäisches Patentamt

(19) European Patent Office

Office européen des brevets

(11) Numéro de publication: **0 126 689**
**B1**

(12) **FASCICULE DE BREVET EUROPEEN**

(45) Date de publication du fascicule du brevet:
**10.12.86**

(21) Numéro de dépôt: **84401004.1**

(22) Date de dépôt: **17.05.84**

(51) Int. Cl.⁴: **F 27 B  9/38,** F 27 D  3/00,
B 65 G  47/54, C 21 D  9/00

(54) **Dispositif d'enfournement de produits sidérurgiques dans un four de réchauffage ou de traitement.**

(30) Priorité: **19.05.83  FR 8308656**

(43) Date de publication de la demande:
**28.11.84 Bulletin 84/48**

(45) Mention de la délivrance du brevet:
**10.12.86 Bulletin 86/50**

(84) Etats contractants désignés:
**BE DE NL**

(56) Documents cités:
**DE - A - 2 653 039**
**FR - A - 981 505**
**FR - A - 1 178 445**
**FR - A - 2 010 395**
**US - A - 2 360 661**
**US - A - 3 375 941**
**US - A - 3 456 819**

(73) Titulaire: **STEIN HEURTEY, Société Anonyme:, Z.A.I. du bois de l'Epine, F-91130 Ris Orangis (FR)**

(72) Inventeur: **Braud, Yves, 18, rue de Penthièvre, F-78310 Maurepas (FR)**
Inventeur: **Fromentin, Jean, 14, rue Lagille, F-75018 Paris (FR)**

(74) Mandataire: **Boivin, Claude, 9, rue Edouard-Charton, F-78000 Versailles (FR)**

## Description

L'introduction des produits sidérurgiques, tels que les brames, dans les fours de réchauffage ou de traitement est en général assurée par des moyens propres à pousser les produits à l'intérieur du four depuis un train de rouleaux sur lesquels ces produits sont amenés. Le plus souvent, les produits sont poussés sur des rails de glissement qui sont disposés entre les rouleaux.

Mais, lors de leur poussée, les produits sidérurgiques frottent par leur face inférieure sur les rouleaux d'amenée et sur les rails ce qui marque cette face inférieure. Par ailleurs, l'effort de poussée est important et nécessite des équipements mécaniques et d'entraînement de grande puissance.

Le brevet US 2360 661 décrit un dispositif d'enfournement de brames ou autres produits sidérurgiques dans un four de réchauffage ou de traitement, qui comprend un train de rouleaux d'alimentation s'étendant le long de l'ouverture d'enfournement du four, des moyens pour pousser les produits à l'intérieur du four depuis le train de rouleaux, et des bras qui s'étendent entre les rouleaux d'alimentation, portent eux-mêmes des rouleaux d'axes parallèles à l'ouverture d'enfournement, et sont articulés par rapport à la structure du four, à l'extérieur de celui-ci.

Les bras sont escamotés lorsqu'une brame arrive sur les rouleaux d'alimentation devant l'ouverture d'enfournement. Puis les bras sont soulevés de sorte que la brame et alors supportée par les rouleaux de ces bras, ce qui permet de la pousser sans frottement vers la position requise par le convoyeur du four.

Mais la présence de l'articulation à l'extérieur du four entraîne un porte-à-faux important, ce qui rend le fonctionnement délicat, étant donné le poids des brames.

La présente invention a pour objet un dispositif d'enfournement de produits sidérurgiques du type ci-dessus, qui est perfectionné de manière à remédier à l'inconvénient qui vient d'être signalé.

Ce dispositif est caractérisé en ce que les bras sont montés pivotants autour d'une articulation située à l'intérieur du four.

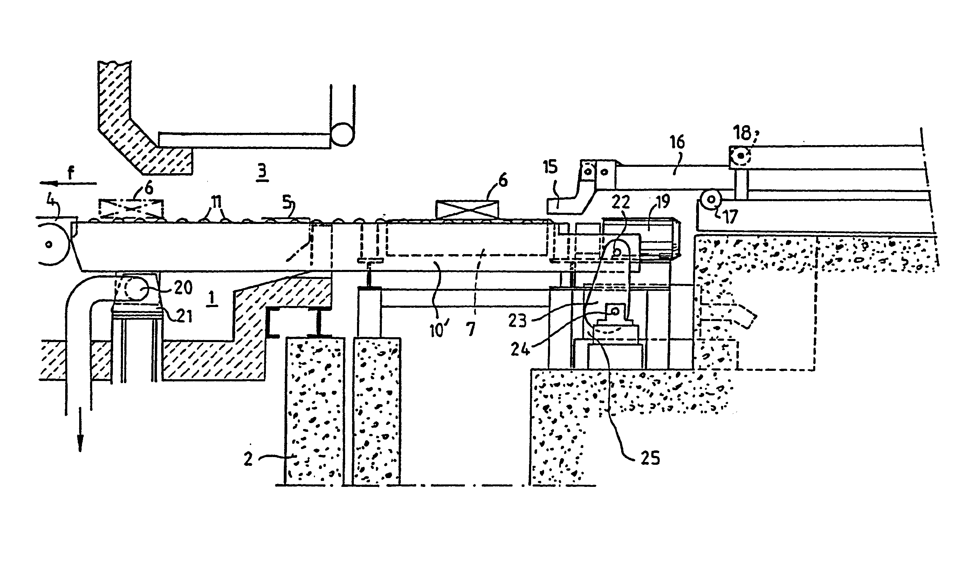

On a décrit ci-après, à titre d'exemple non limitatif, un mode de réalisation du dispositif d'enfournement selon l'invention, avec référence à la figure unique du dessin annexé qui représente schématiquement ce mode de réalisation.

Au dessin, on voit un four 1 qui repose sur une maçonnerie 2, et est muni d'une ouverture d'enfournement 3. Il comporte des longerons fixes 4 destinés à coopérer avec des longerons mobiles 5 pour faire circuler des produits 6 dans le sens de la flèche f.

Le long de l'ouverture d'enfournement 3 sont disposés des rouleaux d'alimentation 7 sur lesquels arrivent les produits 6 et qui sont chacun entraînés en rotation par son propre moteur 19. Les axes de ces rouleaux sont parallèles à l'axe longitudinal du four.

Entre les rouleaux 7 se trouvent, des bras 10' qui sont eux-mêmes munis de petits rouleaux 11 d'axes perpendiculaires à ceux des rouleaux 7, donc parallèles à l'ouverture 3, et s'étendant à l'intérieur du four 1, jusqu'aux longerons 4. Chacun des bras 10' est monté pivotant en 20 sur un support 21 placé à l'intérieur du four 1 et refroidi par circulation d'eau. L'extrémité du bras 10' située à l'extérieur du four est articulée en 22 sur l'une des extrémités d'une bielle 23 dans l'autre extrémité de laquelle est monté pivotant un excentrique qui est calé sur l'arbre de sortie 24 d'un moteur hydraulique 25.

Devant les rouleaux 7 est prévu un bras pousseur 15 qui s'étend dans une direction perpendiculaire aux axes de ces rouleaux et a une longueur presque égale à celle de l'ouverture d'enfournement 3. Ce bras est porté par des longerons horizontaux 16 qui sont mobiles en étant guidés par des galets 17 et 18 et peuvent être déplacés par des vérins non représentés.

Lorsque l'extrémité extérieure de chacun des bras 10' est en position basse, ces bras 10' sont escamotés, c'est-à-dire que les rouleaux 11 situés entre les rouleaux 7 ont leur arêtes supérieures situées en dessous du plan horizontal dans lequel se trouvent les arêtes supérieures de ces rouleaux 7. Dans ces conditions, un produit 6, constitué par exemple par une brame, peut être amené sur les rouleaux 7 devant l'ouverture d'enfournement du four.

On fait alors pivoter l'arbre 24. L'extrémité extérieure des bras 10' se relève et les rouleaux 11 viennent soulever la brame 6. Puis les vérins de commande de la traverse 15 sont actionné de sorte que cette traverse repousse la brame 6 sur les rouleaux 11 et l'amène sur les longerons fixes 4.

## Revendication

Dispositif d'enfournement de brames ou autres produits sidérurgiques dans un four de réchauffage ou de traitement, comprenant un train de rouleaux d'alimentation (7) s'étendant le long de l'ouverture d'enfournement (3) du four, des moyens (15-16) pour pousser les produits à l'intérieur du four depuis le train de rouleaux et des bras (10') qui s'étendent entre les rouleaux d'alimentation (7), portent eux-mêmes des rouleaux (11) d'axes parallèles à l'ouverture d'enfournement (3), et sont articulés par rapport à la structure du four, caractérisé en ce que les bras (10') sont montés pivotants autour d'une articulation (20) située à l'intérieur du four.

## Patentanspruch

Vorrichtung zum Einbringen von Brammen oder anderen Eisenhüttenprodukten in einen Aufwärme- oder Vergütungsofen mit einem Zuführungsrollgang (7), der sich längs der Beschickungsöffnung (3) des Ofens erstreckt, Mitteln (15-16), um die Produkte vom Rollgang in das Innere des Ofens zu stossen und Armen (10'), die sich zwischen den Zuführungsrollen (7) erstrecken, selbst Rollen (11) tragen, deren Achsen parallel zur Beschickungsöffnung (3) stehen, und die im Hinblick auf die Struktur des Ofens gelenkig angeordnet sind, dadurch gekennzeichnet, dass die Arme (10') um eine im Inneren des Ofens gelegene Gelenkverbindung (20) schwenkbar angeordnet sind.

## Claim

A device for charging slabs or other iron and steel products into a reheat or treatment furnace, comprising a train of feed rollers (7) extending along the charging opening (3) of the furnace, means (15-16) for pushing the products inside the furnace from the train of rollers and arms (10') which extend between the feed rollers (7) themselves carrying rollers (11) with axes parallel to the charging opening (3), and are articulated with respect to the structure of the furnace, characterized in that the arms (10') are mounted for pivoting about an articulation (20) situated inside the furnace.